# EUROPÄISCHE PATENTSCHRIFT

(11) **EP 1 692 604 B1**
(45) Veröffentlichungstag und Bekanntmachung des Hinweises auf die Patenterteilung: **21.03.2007**
(21) Anmeldenummer: 04820037.2
(22) Anmeldetag: 02.12.2004
(51) Int. Cl.: G06F 1/32, H04B 1/16

(54) **AUFWECKSIGNAL-DETEKTORSCHALTUNG**
DETECTOR CIRCUIT FOR A WAKE-UP SIGNAL
CIRCUIT DE DETECTION DE SIGNAL D'ACTIVATION

(30) Priorität: 09.12.2003 AT 19732003
(43) Veröffentlichungstag der Anmeldung: 23.08.2006
(73) Patentinhaber: Efkon AG, 8045 Graz (AT)
(72) Erfinder: RIEDER, Helmut, A-8082 Zerlach (AT); PAMMER, Raimund, A-8503 St. Josef (AT); BOH, Wolfgang, A-8045 Graz (AT); HAGER, Markus, A-4675 Weibern (AT)
(74) Vertreter: Sonn & Partner Patentanwälte
(86) Internationale Anmeldenummer: PCT/AT2004/000423
(87) Internationale Veröffentlichungsnummer: WO 2005/057388

(56) Entgegenhaltungen:
- EP-A- 0 451 060
- EP-A- 0 610 700
- WO-A-99/03219
- US-A1- 2003 179 822

## Beschreibung

Die Erfindung betrifft eine Aufwecksignal-Detektorschaltung gemäß dem einleitenden Teil von Anspruch 1. Eine solche Detektorschaltung ist aus der US 2003/179822 A1 bekannt. Diese bekannte Schaltung ist mit einem zur Frequenzermittlung vorgesehenen Zähler und mit einem den Zählwert mit vorgegebenen Tabellenwerten vergleichenden Komparator realisiert.

Bei der aus der WO 99/03219 A bekannten Detektor-Schaltung sind zwei Integratorkreise an einen mit einem Eingangskreis verbundenen Bandpass-Verstärker angeschlossen, und die beiden Integrator-Schaltkreise sind mit ihren Ausgängen an eine Komparatorschaltung gelegt, wobei die beiden Integrator-Schaltkreise unterschiedliche Zeitkonstanten haben. Die Schaltung gemäß dieser WO 99/03219 ist insbesondere für Anwendungen im Freien gedacht, wobei eine spezielle Serien-/Parallel-Schaltung von IR- Detektorelementen in Verbindung mit einem Schwingkreis vorgesehen ist. Dadurch wird eine hohe Empfindlichkeit und Selektivität erzielt, und auf der anderen Seite wird ein geringer Stromverbrauch im "Schlaf"zustand der Schaltung sichergestellt. Es hat sich jedoch gezeigt, dass bei dieser bekannten Schaltung mitunter "Fehl-Wake-Ups" auftreten, d.h. die Schaltung wird aufgrund einer fehlerhaften Signal-Detektion "aufgeweckt", obgleich kein Aufwecksignal empfangen wird.

Es ist nun Aufgabe der Erfindung, eine Aufwecksignal-Detektorschaltung für eine Aufweckschaltung, für elektronische Geräte etc. vorzuschlagen, wobei eine hohe Selektivität erzielt wird und Fehl-Wake-Ups vermieden werden, und zwar unabhängig davon, wie der Eingangskreis im Einzelnen aufgebaut ist. Weiters soll der Strombedarf der Schaltung so niedrig wie möglich gehalten werden, und insbesondere soll die vorliegende Schaltung für Fälle gut geeignet sein, wo das Verhältnis Arbeitszeit/Ruhezeit sehr klein ist, wie etwa im Fall eines Einsatzes bei elektronischen Geräten in Mautsystemen.

Zur Lösung dieser Aufgabe sieht die Erfindung eine Aufwecksignal-Detektorschaltung wie in Anspruch 1 definiert vor. Vorteilhafte Ausführungsformen und Weiterbildungen sind in den anhängigen Ansprüchen angegeben.

In der vorliegenden Detektorschaltung bestimmt die Größe des Fensters des Fenster-Komparators die Bandbreite, in welcher die Frequenzdetektion sensibel ist, wobei die Position des Fensters die Frequenzlage bestimmt, wo der Frequenzdetektor sensibel ist. Dabei ist es vergleichsweise einfach möglich, die Breite des Fensters und die Lage des Fensters für den jeweiligen Anwendungsfall anzupassen, um eine optimale Frequenzdetektion sicherzustellen. Um Fehlauslösungen der Detektorschaltung aufgrund einer einzigen Falschdetektierung - die etwa dann zustande kommen kann, wenn im Fall eines Eingangskreises wie in WO 99/03219 A beschrieben der Schwingkreis durch ein ähnliches Signal wie das Aufwecksignal angeregt wird - zu verhindern, wird mit Hilfe des Fehldetektionen-Sperrkreises eine Ansteuerung des Ausgangskreises erst dann vorgesehen, wenn mehrere, z.B. zwei oder drei, gültige Detektierungen erkannt worden sind. Die Anzahl der gültigen Detektierungen ist dabei bevorzugt einstellbar, um auch so eine Anpassung an den jeweiligen Einsatzzweck vornehmen zu können.

Ein besonders niedriger Stromverbrauch ergibt sich auch dadurch, dass der Fenster-Komparator mit zwei zueinander parallel geschalteten Komparatoren aufgebaut ist, von denen zwei gegensätzliche Eingänge als Signaleingänge zusammengeschaltet sind. Die jeweiligen Eingänge der Komparatoren können dabei durch entsprechende Spannungsteiler vorgespannt bzw. voreingestellt sein. Weiters werden dadurch gut definierte Frequenzdetektions-Signale erzielt, dass an den Fenster-Komparator eine Latch-Schaltkreis angeschlossen ist, an dessen Takteingang ein vom Eingangs-Datensignal hergeleitetes Taktsignal angelegt ist.

Um den Einfluss von Gleichanteilen im Nutzsignal zu unterdrücken, wobei dieser Gleichanteil beispielsweise im Fall einer Anwendung bei Mautsystemen durch eine Sonneneinstrahlung oder aber in anderen Fällen durch eine Arbeitspunktdrift verursacht sein kann, kann mit Vorteil vorgesehen werden, dass dem Fenster-Komparator ein Eingangs-Komparator vorgeschaltet ist, bei dem an einem Eingang, dem Signaleinang, ein vom Eingangskreis erhaltenes Signal und an einem anderen Eingang, dem Referenzeingang, ein Schwellenwert-Signal angelegt ist. Um den Referenzpegel, d.h. das Schwellenwert-Signal, auf besonders einfache und dabei immer den jeweiligen Verhältnissen angepasste Weise zu erhalten, ist es auch günstig, wenn der Referenzeingang des Eingangs-Komparators an einen Tiefpass-Schaltkreis angeschlossen ist, dessen Eingang mit dem Signaleingang des Eingangs-Komparators verbunden ist.

Zur Ansteuerung des Fenster-Komparators hat es sich weiters als besonders vorteilhaft erwiesen, wenn im Falle einer solchen Schaltungsausbildung mit Eingangs-Komparator der Integrator dem Eingangs-Komparator nachgeschaltet ist. Mit der Integratorspannung kann in vorteilhafter Weise der nachfolgende Fenster-Komparator angesteuert werden.

Weiters ist es für die Herleitung des Taktsignals für den Latch-Schaltkreis günstig, wenn der Takteingang des Latch-Schaltkreises mit dem Ausgang des Eingangs-Komparators verbunden ist.

Um Fehldetektionen zu unterdrücken, könnte an sich die Zahl der aufeinanderfolgenden Frequenzdetektionen gezählt werden, wobei bei Erreichen einer vorgegebenen Zahl ein Durchschalten zum Ausgangskreis erfolgt. Um zum Ausfiltern von derartigen Fehldetektierungen auf besonders einfache Art und Weise festzustellen, dass innerhalb eines Zeitabschnitts eine gewissen Anzahl von Ausgangsimpulsen auftritt, kann aber mit Vorteil vorgesehen werden, dass der Fehldetektions-Sperrkreis einen im Signalpfad vorgesehenen Integrator sowie einen daran angeschalteten Komparator aufweist, an dessen anderem Eingang eine Referenzspannung liegt. Durch Einstellung der Referenzspannung kann dabei die Anzahl von ordnungsgemäßen Detektierungen festgelegt werden, die erforderlich sind, um Ausgangsimpulse zum Ausgangskreis durchzulassen und die gewünschte Schaltfunktion, insbesondere ein Einschalten ("Aufwecken") des zugehörigen elektronischen Gerätes, zu veranlassen.

Der Ausgangskreis kann mit Vorteil eine Flip-Flop-Schaltung aufweisen, die durch das Ausgangssignal des Fehldetektions-Sperrkreises, insbesondere des hiefür vorgesehenen, an den Integrator angeschlossenen Komparators, angesteuert wird.

Für einen geringen Strombedarf ist es weiters vorteilhaft, wenn jeder Komparator des Komparatorschaltkreises ein Niedrigleistungs-Komparator ist.

Für eine platzsparende, kompakte Bauweise der Schaltung hat es sich auch als vorteilhaft erwiesen, wenn alle Komparatoren in einem gemeinsamen IC-Gehäuse untergebracht sind.

Es hat sich ferner als vorteilhaft erwiesen, wenn zwischen dem Eingangs-Komparator und dem Fenster-Komparator bzw. dem dem Fenster-Komparator vorgeschalteten Integrator ein Frequenzteiler, der insbesondere mit einer Flip-Flop-Schaltung realisiert wird, angeordnet ist. Im Übrigen kann auch der Latch-Schaltkreis in vorteilhafter Weise mit Hilfe einer Flip-Flop-Schaltung gebildet werden. Auf diese Weise kann sich insgesamt eine Schaltung mit beispielsweise vier Komparatoren (diese bevorzugt in einem gemeinsamen Gehäuse) und drei Flip-Flop-Schaltungen sowie mit durch Widerstände und Kondensatoren gebildeten Integratoren ergeben, was zu einer einfachen Schaltungskonfiguration mit niedrigem Stromverbrauch führt.

Die Erfindung wird nachfolgend anhand von in der Zeichnung veranschaulichten bevorzugten Ausführungsbeispielen, auf die sie jedoch nicht beschränkt sein soll, noch weiter erläutert. Im Einzelnen zeigen in der Zeichnung:
Fig. 1 ein Blockschaltbild einer sog. Wake-Up-Schaltung mit einer erfindungsgemäßen Aufwecksignal-Detektorschaltung;
Fig. 2 in einer detaillierteren Form ein Schaltbild einer entsprechenden Aufwecksignal-Detektorschaltung; und
Fig. 3 in vier Zeilen Signalformen, die in der Detektorschaltung gemäß Fig. 2 bei einem als Latch-Schaltkreis vorgesehenen Flip-Flop auftreten können.

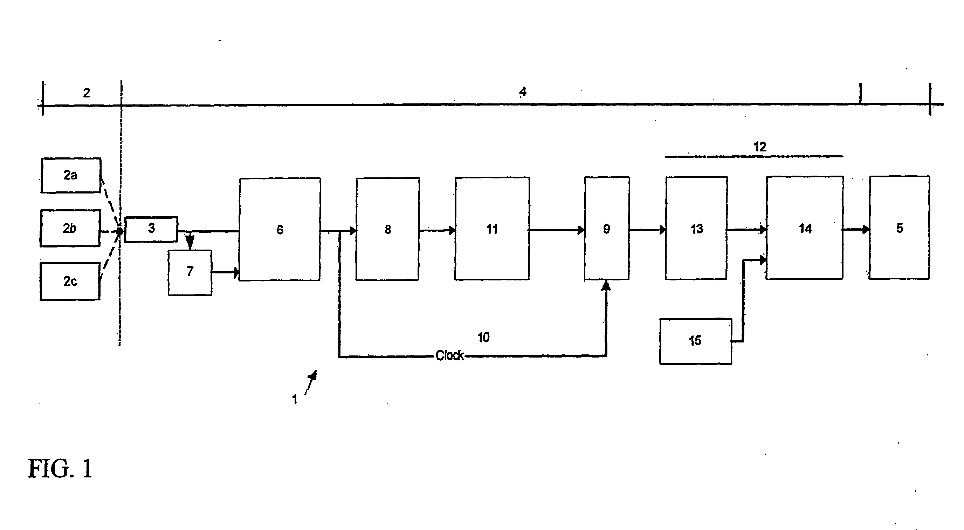

In Fig. 1 ist schematisch eine Aufweckschaltung für ein elektronisches Gerät, etwa für ein elektronisches Mautsystem, veranschaulicht, wobei diese Wake-Up-Schaltung oder Aufweckschaltung insgesamt mit 1 bezeichnet ist. Die Aufweckschaltung 1 weist einen Eingangskreis 2 auf, bei dem es sich beispielsweise um einen Infrarot-Empfänger 2a, einen Mikrowellen-Empfänger 2b oder irgend einen anderen Empfänger-Schaltkreis 2c handeln kann, wie dies schematisch in Fig. 1 angedeutet ist. In der Praxis wird dabei natürlich nur einer dieser Eingangskreise 2a, 2b oder 2c vorhanden sein, und insbesondere kann ein Eingangskreis wie in der bereits erwähnten WO 99/03219 A beschrieben Verwendung finden.

An diesen Eingangskreis 2 schließt über einen Verstärker 3 die eigentliche Detektorschaltung 4 an, in der das jeweilige Aufwecksignal detektiert wird, um schließlich einen Ausgangskreis 5, mit dem das zugehörige elektronische Gerät in den aktiven Zustand gebracht wird, zu aktivieren.

Der Verstärker 3 kann wie ebenfalls in der WO 99/032190 A beschrieben durch einen selektiven Bandpass-Verstärker gebildet sein, um eine selektive Verstärkung des Empfangssignals vorzusehen. Das verstärkte Empfangs-Signal wird dann einem Eingangs-Komparator 6 zugeführt, dem an einem zweiten Eingang als Vergleichspegel ein über einen Tiefpass 7 aus dem verstärkten Empfangssignal gebildetes Referenzsignal zugeführt wird. Auf diese Weise kann der Einfluss von Gleichanteilen im Empfangssignal, etwa zufolge von Störungen, einer Arbeitspunktdrift oder dergleichen, auf einfache Weise wirksam unterdrückt werden.

An den Ausgang dieses Eingangs-Komparators 6 ist ein Integrator 8 angeschlossen, und andererseits wird das am Ausgang des Eingangs-Komparators 6 liegende Signal als Taktsignal einem Latch-Schaltkreis 9, genauer dessen Takteingang, zugeführt, wie in Fig. 1 mit der Verbindung 10 "Clock" angedeutet ist. Der Dateneingang dieses Latch-Schaltkreises 9 ist an den Ausgang eines Fenster-Komparators 11 angeschlossen. Wenn sich die vom Integrator 8 am Datenausgang abgegebene Spannung zu dem Zeitpunkt, zu dem der Latch-Schaltkreis 9 über die Verbindung 10 vom Ausgangssignal des Eingangs-Komparators 6 getaktet wird, in dem entsprechend schmal bemessenen Fenster des Fenster-Komparators 11 befindet, wird der Ausgang des Latch-Schaltkreises 9 gesetzt. Die Größe, d.h. Breite, des Fensters bestimmt dabei die Bandbreite, in welcher die Frequenzdetektion erfolgt, und die Lage des Fensters im Aussteuerungsbereich des Integrators 8 bestimmt die Frequenzlage, in der die Detektorschaltung 4 anspricht. Dies bedeutet somit, dass die Lage des Fensters des Fenster-Komparators 11 - z.B. im MHz- oder Ghz-Bereich - die Wake-up-Frequenz bestimmt, und die Breite des Fensters bestimmt dann die Breite des Bandes von detektierbaren Frequenzen, also die Selektivität der Detektorschaltung 4.

Um eine Fehlauslösung der Detektorschaltung 4 aufgrund einer einzelnen Falschdetektion zu verhindern, ist weiters bei der vorliegenden Detektorschaltung 4 ein Fehldetektionen-Sperrkreis 12 vorgesehen, der einen über einen Integrator 13 an den Ausgang des Latch-Schaltkreises 9 angeschlossenen Komparator 14 enthält. Dem zweiten Eingang dieses Komparators 14 wird von einer Referenzsignal-Schaltung 15 eine Referenzspannung zugeführt, wobei diese Referenzspannung einstellbar ist. Im Integrator 13 werden die vom Latch-Schaltkreis 9 abgegebenen Impulse, die den Signaldetektionen entsprechen, aufintegriert, und bei einer entsprechenden Anzahl von aufeinanderfolgenden Impulsen, somit bei Überschreiten der von der Referenzsignal-Schaltung 15 abgegebenen Referenzspannung, gibt der Komparator 14 an seinem Ausgang ein entsprechendes Schaltsignal ab, um den Ausgangskreis 5 zu aktivieren. Durch die vorhin angesprochene Einstellung der Referenzspannung wird somit die Anzahl von Impulsen, die am Ausgang des Latch-Schaltkreises 9 in einer vorgegebenen Zeit auftreten muss, entsprechend vorgegeben, wobei erst bei Vorliegen der vorgegebenen Anzahl von gültigen Detektierungen der Detektorausgang, also der Ausgangskreis 5, aktiviert wird.

Auf diese Weise können zufällige Übereinstimmungen von Eingangssignalen mit dem definierten Wake-Up-Signal durch diesen letzten Komparator 14, der erst auf eine Mindestanzahl von gültigen Wake-Up-Impulsen reagiert, schnell und zuverlässig ausgefiltert werden.

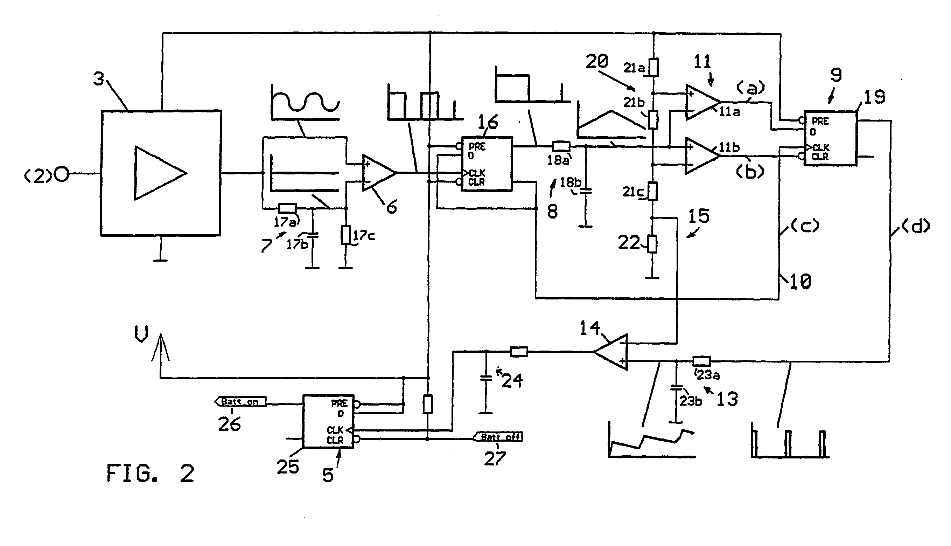

In Fig. 2 ist mehr im Detail eine mögliche Ausführung der Detektorschaltung 4 mit leistungsarmen Schaltungsbausteinen gezeigt, nämlich insbesondere mit vier leistungsarmen Komparator-Bausteinen sowie mit Flip-Flop-Schaltungen sowie mit Integratoren in Form von RC-Gliedern.

Im Einzelnen ist ersichtlich, dass an den Verstärker 3 der Eingangs-Komparator 6 mit einem "+"-Eingang angeschlossen ist, wobei eine zugehörige sinusförmige Wellenform in Fig. 2 eingezeichnet ist. Dem "-"-Eingang dieses Eingangs-Komparators 6 wird ein Referenz-Gleichpegel zugeführt, s. das ebenfalls schematisch in Fig. 2 eingezeichnete Gleichspannungs-Diagramm, wobei dieser Vergleichspegel über den Tiefpass 7 erhalten wird, der aus einem Längs-Widerstand 17a und einem Quer-Kondensator 17b gebildet ist, wobei weiters ein Ableit-Widerstand 17c vorgesehen ist. Mit diesem Widerstand 17c kann die Ansprechschwelle des Eingangs-Komparators 6 so eingestellt werden, dass ein Schalten des Eingangs-Komparators 6 durch den Rauschpegel des Eingangs-Verstärkers 3 verhindert wird. Es sei erwähnt, dass das in Fig. 2 als Referenzsignal veranschaulichte Gleichspannungssignal idealisiert dargestellt ist, und dass sich der Wert des Gleichspannungspegels durchaus mit der Zeit - etwa in Anpassung an den Gleichanteil im Eingangssignal - ändern kann. Nichtsdestoweniger gelingt es damit, aus dem verstärkten Eingangssignal, das wie gezeigt einen Gleichanteil enthält, diesen Gleichanteil auszufiltern und so beispielsweise den Einfluss der Arbeitspunktdrift des Verstärkers 3 auszuschalten.

An den Ausgang des Eingangs-Komparators 6, an dem Reckteckimpulse auftreten, wie ebenfalls in Fig.2 schematisch eingezeichnet ist, ist ein Flip-Flop 16 angeschaltet, um die Frequenz des Ausgangssignals des Eingangs-Komparators 6 zu halbieren und das Tastverhältnis auf 50% zu symmetrieren. Die am Q-Ausgang dieser Flip-Flop-Schaltung 16 erhaltenen Impulse, die wiederum schematisch in Fig. 2 in einem Diagramm veranschaulicht sind, werden dem Integrator 8 zugeführt, der durch einen Längs-Widerstand 18a und einen Quer-Kondensator 18b gebildet ist. Dadurch wird das Rechteck-Ausgangssignal der Flip-Flop-Schaltung 16 in ein Sägezahn-Signal umgewandelt, wie ebenfalls in Fig. 2 schematisch angedeutet ist. An einen weiteren Ausgang der Flip-Flop-Schaltung 16 ist über die Verbindung 10 der Takteingang des Latch-Schaltkreises 9 angeschlossen, welcher ebenfalls durch eine Flip-Flop-Schaltung 19 gebildet ist. Diese Flip-Flop-Schaltung 19 des Latch-Schaltkreises 9 erhält einerseits an ihrem D-Eingang und andererseits an ihrem invertierenden CLR-Eingang die Ausgangssignale von zwei den Fenster-Komparator 11 bildenden Komparatoren 11a und 11b zugeführt. Diese beiden Komparatoren 11a, 11b erhalten einerseits an ihrem "-"-Eingang (Komparator 11a) bzw. an ihrem "+"-Eingang (Komparator 11b) das Sägezahn-Signal zugeführt, das am Ausgang des Integrators 8 erhalten wird, und die anderen Eingänge liegen über eine Spannungsteilerschaltung 20 an einer Versorgungsspannung V, um so die Referenzpegel für die Komparatoren 11a, 11b zu erhalten. Mit der Versorgungsspannung V werden alle Komponenten der Schaltung versorgt, wie aus Fig.2 ersichtlich ist, so dass sich eventuelle Spannungsschwankungen durch das ratiometrische Prinzip nicht auf die Schaltungsfunktion auswirken.

Die Spannungsteilerschaltung 20 ist wie dargestellt mit mehreren Widerständen aufgebaut. Ein Teil dieser Widerstands- bzw. Spannungsteilerschaltung 20 bildet zugleich die Referenzsignal-Schaltung 15 für den Ausgangs-Komparator 14, dem das am Q-Ausgang der Flip-Flop-Schaltung 19, also des Latch-Schaltkreises 9, auftretende Signal über den Integrator 13 zugeführt wird. Insbesondere wird die Referenzspannung für den Komparator 14 durch die Spannung am Widerstand 22 der Widerstandsschaltung 20 festgelegt, und die anderen Widerstände 21a, 21b und 21c dienen zur Einstellung der Komparatoren 11a, 11b des Fenster-Komparators.

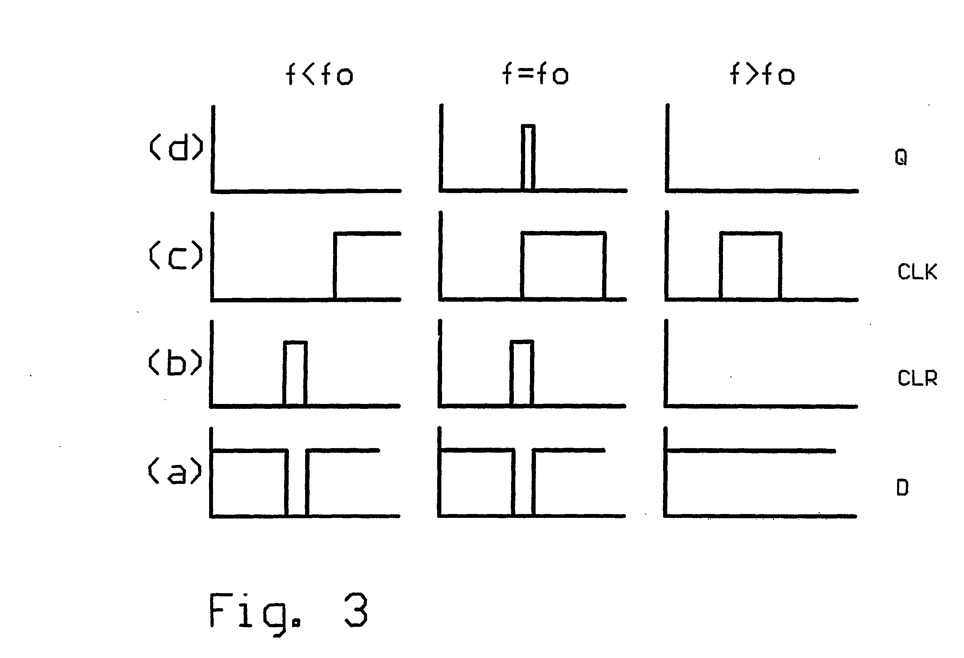

An der Flip-Flop-Schaltung 19 des Latch-Schaltkreises 9 treten je nachdem, ob die jeweilige Signal-Frequenz f größer oder kleiner als die vorgegebene Wake-up-Frequenz f0, die zu detektieren ist, oder ob sie gleich dieser vorgegebenen Frequenz f0 ist, verschiedene Signale auf, wobei in Fig. 3 in der Zeile (a) das Signal am D-Eingang des Flip-Flops 19, in der Zeile (b) das Signal am CLR-Eingang des Flip-Flops 19 und in der Zeile(c) das Signal am Takteingang CLK des Flip-Flops 19 gezeigt sind, und zwar jeweils nebeneinander für die drei Fälle (1) f<f0, (2) f=f0 und (3) f>f0. In der Zeile (d) ist schließlich das jeweils am Q-Ausgang des Flip-Flops 19 auftretende Ausgangssignal gezeigt, wobei ersichtlich ist, dass der Q-Ausgang des Flip-Flops 19 nur gesetzt wird, wenn f=f0 gegeben ist, da sonst die zueinander komplementären Eingangssignale am D-Eingang bzw. CLR-Eingang des Flip-Flops 19 außerhalb der Taktung des Flip-Flops 19 liegen bzw. keine entsprechenden Impuls-Signale vom Fenster-Komparator 11 erhalten werden. Die im Fall des Vorliegens einer der vorgegebenen Frequenz f0 entsprechenden Frequenz f erhaltenen Impulse, die somit einer Wake-Up-Signal-Detektion entsprechen, werden dann im Integrator 13 integriert, s. auch die vor und nach diesem Integrator 13 schematisch in Fig. 2 eingezeichneten Signaldiagramme, wobei die am Ausgang des Integrators 13 erhaltene Spannung ansteigt, bis der Referenzpegel am "-"-Eingang des Komparators 14 erreicht wird, wobei dann der Komparator 14 an seinem Ausgang ein entsprechendes Schalt- oder Aktivierungssignal für den Ausgangskreis 5 abgibt. Der Integrator 13 ist ebenfalls durch einen Längs-Widerstand 23a und einen Quer-Kondensator 23b gebildet.

Das Ausgangssignal des Komparators 14 wird über einen Tiefpass 24 an den durch eine weitere Flip-Flop-Schaltung 25 gebildeten Ausgangskreis 5 gelegt, um diese Flip-Flop-Schaltung 25 zu setzen.

Die Ausgangssignale der den Fenster-Komparator 11 bildenden Komparatoren 11a und 11b werden wie erwähnt an den D-Eingang und an den CLR-Eingang der Flip-Flop-Schaltung 19 gelegt, und der Ausgang Q dieser Flip-Flop-Schaltung 19 kann nur dann auf "hoch" gehen, d.h. einen Impuls abgeben, wenn sich das vom Integrator 8 dem Fenster-Komparator 11 zugeführte Sägezahn-Signal zum Zeitpunkt der steigenden Taktflanke an der Flip-Flop-Schaltung 19 (wobei das Taktsignal wie erwähnt über die Verbindung 10 zugeführt wird) innerhalb des Fensters des Fenster-Komparators 11 befindet. Dies ist wie erwähnt nur in einem engen Frequenzband um die Wake-Up-Frequenz f0 der Fall. Wenn die Frequenz f kleiner ist als f0, ist der D-Eingang der Flip-Flop-Schaltung 19 zum Zeitpunkt der steigenden Taktflanke bereits auf niedrig, und somit bleibt auch der Ausgang der Flip-Flop-Schaltung 19 auf niedrig. Wenn die Frequenz f größer als f0 ist, ist der CLR-Eingang der Flip-Flop-Schaltung zum Zeitpunkt der steigenden Taktflanke an der Flip-Flop-Schaltung 19 noch immer auf niedrig, und somit bleibt auch der Ausgang Q der Flip-Flop-Schaltung 19 auf niedrig.

Mit dem ausgangsseitigen Komparator 14 und dem vorgeschalteten Integrator 13 gelingt es, etwaige Fehldetektierungen auszufiltern, da innerhalb eines vorgegebenen Zeitabschnittes eine bestimmte Anzahl von Ausgangsimpulsen am Q-Ausgang der Flip-Flop-Schaltung 19 auftreten muss, um letztlich das Ausgangs-Flip-Flop 25 zu setzen. Diese Flip-Flop-Schaltung 25 oder ganz allgemein der Ausgangskreis 5 gibt dann an einem Ausgang ein Schaltsignal "Batt on" ab, das bei 26 in Fig. 2 dargestellt ist, und das zum Einschalten eines Verbrauchers, d.h. zum Anschalten an eine Versorgungsspannung, wie z.B. an eine Batterie, verwendet werden kann. Zum Zurücksetzen der Ausgangs-Flip-Flop-Schaltung 25 kann ein Niedrig-Signal impuls "Batt off" an die Flip-Flop-Schaltung 25 angelegt werden, wie in Fig. 2 bei 27 veranschaulicht ist. Dadurch kann ein - nicht dargestellter - Verbraucher von der Batterie getrennt werden. (Die Versorgungsspannung V ist aber für die vorliegende Detektorschaltung permanent vorhanden.)

Alle vier vorstehend angesprochenen Komparatoren 6, 11a, 11b und 14 können als Komparatoren mit niedrigem Stromverbrauch, als sog. Micro-Power-Komparatoren oder Low-Power-Komparatoren, ausgeführt sein. Diese Komparatoren 6, 11a, 11b und 14 befinden sich aus Platzgründen bevorzugt in einem nicht näher dargestellten Gehäuse, und sie haben aus Stromspargründen einen sog. Push-Pull-Ausgang.

Mit Hilfe derartiger Komparatoren sowie der Flip-Flop-Schaltungen 16, 19 und 25, wie oben beschrieben, gelingt es, eine Detektorschaltung 4 mit äußerst geringem Strombedarf zu realisieren. In einem konkreten Ausführungsbeispiel betrug der Strombedarf der gesamten Schaltung, ohne Eingangssignal, bloß 12 µA, bei einem Eingangssignal in Form eines 85 kHz/1ms Bursts nur 20 µA und im Fall eines Dauer-Eingangssignals bei einer Frequenz von 85 kHz nur 55 µA.

Die beschriebene Detektorschaltung 4 eignet sich - in Verbindung mit beliebigen Eingangskreisen 2, wie erwähnt, insbesondere auch in Verbindung mit dem bekannten Eingangskreis mit Parallelschwingkreis (zur Empfindlichkeitssteigerung) - für alle elektronischen Geräte, die ständig bereit sein müssen, ihre Aufgabe zu erfüllen, wo aber das Verhältnis von Arbeitszeit zu Ruhezeit sehr klein ist. Dies ist beispielsweise bei elektronischen Geräten in elektronischen Mautsystemen der Fall. In der Ruhezeit, die vergleichsweise lang sein kann, ist aus Energiespargründen der Strombedarf auf ein Minimum zu reduzieren, und dies gelingt mit der vorliegenden Detektorschaltung 4 in hervorragender Weise. Insofern eignet sich die vorliegende Detektorschaltung in besonderem Maße als Wake-Up-Schaltungsteil für Langzeit-betriebene, insbesondere Batterie-gespeiste elektronische Geräte.

Ein weiterer Vorteil wird wie erwähnt dadurch erzielt, dass bei Eingangssignalen mit zufälligen Übereinstimmungen mit dem definierten Wake-Up-Signal durch den letzten Komparator 14, den Ausgangs-Komparator, der erst auf eine Mindestanzahl von gültigen Wake-Up-Impulsen reagiert, diese Fehl-Detektionen auf einfache Weise und zuverlässig ausgefiltert werden können.

Im Rahmen der Erfindung sind selbstverständlich verschiedene Modifikationen der beispielhaft beschriebenen Detektorschaltung möglich, wie etwa, dass der Fehldetektionen-Sperrkreis 12 auch mit einem eine vorgegebene Anzahl von Detektionen zählenden Zähler realisiert werden kann, der schließlich - bei Erreichen der vorgegebenen Anzahl - ein Durchschalten des "Aufwecksignals" zur Auslösung der gewünschten Schaltfunktion bewerkstelligt.

Es ist auch mit Vorteil möglich, mehrere Detektorschaltungen wie beschrieben zueinander parallel zu schalten, wobei die Detektorschaltungen auf verschiedene Frequenzen eingestellt sind; auf diese Weise ist es möglich, auch komplexere Eingangssignale mit unterschiedlichen Frequenzen (Frequenzumtastung) zu detektieren.

## Patentansprüche

1. Aufwecksignal-Detektorschaltung mit einem an einen Eingangskreis (2) angeschlossenen Komparatorschaltkreis, an den ein Ausgangskreis (5) angeschlossen ist, und mit einem den Ausgangskreis (5) erst bei Vorliegen mehrerer gültiger Detektierungen aktivierenden Fehldetektionen-Sperrkreis (12), **dadurch gekennzeichnet, dass** der Komparatorschaltkreis zur Frequenzdetektion innerhalb einer vorgegebenen Bandbreite einen Fenster-Komparator (11) mit zwei zueinander parallel geschalteten Komparatoren (11a, 11b) aufweist, von denen zwei gegensätzliche mit einem Integrator (8) verbundene Eingänge als Signaleingänge zusammengeschaltet sind, wobei an den Fenster-Komparator (11) ein Latch-Schaltkreis (9) angeschlossen ist, an dessen Takteingang ein vom Eingangs-Datensignal hergeleitetes Taktsignal angelegt ist, und mit dem der Fehldetektionen-Sperrkreis (12) verbunden ist.

2. Aufwecksignal-Detektorschaltung nach Anspruch 1, **dadurch gekennzeichnet, dass** dem Fenster-Komparator (11) ein Eingangs-Komparator (6) vorgeschaltet ist, bei dem an einem Eingang, dem Signaleingang, ein vom Eingangskreis (2) erhaltenes Signal und an einem anderen Eingang, dem Referenzeingang, ein Schwellenwert-Signal angelegt ist.

3. Aufwecksignal-Detektorschaltung nach Anspruch 2, **dadurch gekennzeichnet, dass** der Referenzeingang des Eingangs-Komparators (6) an einem Tiefpass-Schaltkreis (7) angeschlossen ist, dessen Eingang mit dem Signaleingang des Eingangs-Komparators (6) verbunden ist.

4. Aufwecksignal-Detektorschaltung nach Anspruch 2 oder 3, **dadurch gekennzeichnet, dass** der Integrator (8) dem Eingangs-Komparator (6) nachgeschaltet ist.

5. Aufwecksignal-Detektorschaltung nach einem der Ansprüche 2 bis 4, **dadurch gekennzeichnet, dass** der Takteingang des Latch-Schaltkreises (9) mit dem Ausgang des Eingangs-Komparators (6) verbunden ist.

6. Aufwecksignal-Detektorschaltung nach einem der Ansprüche 1 bis 5, **dadurch gekennzeichnet, dass** der Fehldetektions-Sperrkreis (12) einen im Signalpfad vorgesehenen Integrator (13) sowie einen daran angeschalteten Komparator (14) aufweist, an dessen anderem Eingang eine Referenzspannung liegt.

7. Aufwecksignal-Detektorschaltung nach einem der Ansprüche 1 bis 6, **dadurch gekennzeichnet, dass** an den Fehldetektions-Sperrkreis (12) als Ausgangskreis (5) eine Flip-Flop-Schaltung (25) angeschlossen ist.

8. Aufwecksignal-Detektorschaltung nach einem der Ansprüche 1 bis 7, **dadurch gekennzeichnet, dass** jeder Komparator (6, 11a, 11b, 14) des Komparatorschaltkreises ein Niedrigleistungs-Komparator ist.

9. Aufwecksignal-Detektorschaltung nach einem der Ansprüche 1 bis 8, **dadurch gekennzeichnet, dass** alle Komparatoren (6, 11a, 11b, 14) in einem gemeinsamen IC-Gehäuse untergebracht sind.

## Claims

1. A wake-up signal detector circuit arrangement comprising a comparator circuit connected to an input circuit (2), an output circuit (5) being connected to said comparator circuit, and an incorrect-detection blocking circuit (12) activating the output circuit (5) only in the case of the presence of several valid detections, **characterised in that** the comparator circuit includes a window comparator (11) for frequency detection within a predetermined band width, which window comparator comprises two comparators (11a, 11b) connected in parallel to each other, two opposite inputs of which, which are connected to an integrator (8), are interconnected as signal inputs, a latch circuit (9) being connected to the window comparator (11), and a clock signal derived from the input data signal being supplied to the clock input of the latch circuit, and the incorrect-detection blocking circuit (12) being connected to said latch circuit (9).

2. A wake-up signal detector circuit arrangement according to claim 1, **characterised in that** an input comparator (6) is connected upstream of the window comparator (11), wherein a signal received from the input circuit (2) is applied to the one input, the signal input, and a threshold signal is applied to another input, the reference input.

3. A wake-up signal detector circuit arrangement according to claim 2, **characterised in that** the reference input of the input comparator (6) is connected to a low-pass circuit (7), the input of which is connected to the signal input of the input comparator (6).

4. A wake-up signal detector circuit arrangement according to claim 2 or 3, **characterised in that** the integrator (8) is connected downstream of the input comparator (6).

5. A wake-up signal detector circuit arrangement according to any one of claims 2 to 4, **characterised in that** the clock input of the latch circuit (9) is connected to the output of the input comparator (6).

6. A wake-up signal detector circuit arrangement according to any one of claims 1 to 5, **characterised in that** the incorrect-detection blocking circuit (12) has an integrating circuit (13) provided in the signal path, as well as a comparator (14) connected thereto, to whose other input a reference voltage is applied.

7. A wake-up signal detector circuit arrangement according to any one of claims 1 to 6, **characterised in that** a flip-flop circuit (25) is connected to the incorrect-detection blocking circuit (12) as an output circuit (5).

8. A wake-up signal detector circuit arrangement according to any one of claims 1 to 7, **characterised in that** each comparator (6, 11a, 11b, 14) of the comparator circuit is a low power comparator.

9. A wake-up signal detector circuit arrangement according to any one of claims 1 to 8, **characterised in that** all comparators (6, 11a, 11b, 14) are housed in a common IC package.

## Revendications

1. Circuit de détection d'un signal d'activation comportant un circuit comparateur relié à un circuit d'entrée (2), auquel est relié un circuit de sortie (5), et un circuit de blocage de détection d'erreurs (12) activant le circuit de sortie (5) lors de la présence de plusieurs détections valides, **caractérisé en ce que** le circuit comparateur présente, en vue de la détection de fréquence à l'intérieur d'une bande passante prédéterminée, un comparateur de fenêtre (11) comportant deux comparateurs montés en parallèle (11a, 11b), grâce auquel deux entrées opposées reliées à un intégrateur (8) en tant qu'entrées de signal sont interconnectées, dans lequel un circuit de verrouillage (9), à l'entrée horloge duquel un signal d'horloge provenant du signal de données d'entrée est appliqué, et auquel est relié le circuit de blocage de détection d'erreurs (12), est relié au comparateur de fenêtre (11).

2. Circuit de détection d'un signal d'activation selon la revendication 1, **caractérisé en ce qu'**est placé en amont du comparateur de fenêtre (11) un comparateur d'entrée (6), auquel à une entrée, l'entrée de signal, un signal obtenu par le circuit d'entrée (2) et à une autre entrée, l'entrée de référence, un signal de valeur de seuil sont appliqués.

3. Circuit de détection d'un signal d'activation selon la revendication 2, **caractérisé en ce que** l'entrée de référence du comparateur d'entrée (6) est reliée à un circuit de commutation passe bas (7), dont l'entrée est reliée à l'entrée de signal du comparateur d'entrée (6).

4. Circuit de détection de signal d'activation selon la revendication 2 ou 3, **caractérisé en ce que** l'intégrateur (8) est placé en aval du comparateur d'entrée (6).

5. Circuit de détection d'un signal d'activation selon l'une des revendications 2 à 4, **caractérisé en ce que** l'entrée horloge du circuit de verrouillage (9) est reliée à la sortie du comparateur d'entrée (6).

6. Circuit de détection d'un signal d'activation selon l'une des revendications 1 à 5, **caractérisé en ce que** le circuit de blocage de détection d'erreurs (12) présente un intégrateur (13) prévu dans le trajet de signal ainsi qu'un comparateur (14) relié à celui-ci, à l'autre entrée duquel se trouve une tension de référence.

7. Circuit de détection de signal d'activation selon l'une des revendications 1 à 6, **caractérisé en ce qu'**un circuit bascule (25) est relié au circuit de blocage de détection d'erreurs (12) en tant que circuit de sortie (5).

8. Circuit de détection de signal d'activation selon l'une des revendications 1 à 7, **caractérisé en ce que** chaque comparateur (6, 11a, 11b, 14) du circuit comparateur est un comparateur basse puissance.

9. Circuit de détection de signal d'activation selon l'une des revendications 1 à 8, **caractérisé en ce que** tous les comparateurs (6, 11a, 11b, 14) sont placés dans un boîtier CI commun.
